# DEMANDE DE BREVET EUROPEEN

(11) **EP 1 400 909 A1**
(43) Date de publication de la demande: **24.03.2004**
(21) Numéro de dépôt: 02447177.3
(22) Date de dépôt: 16.09.2002
(51) Int. Cl.: G06F 19/00, G06T 5/00

(54) **Détection et correction d'erreur d'orientation d'une image radiographique numérique**

(71) Demandeur: Lathuy S.C.S., 6280 Gerpinnes (BE)
(72) Inventeur: Lathuy, Jean-Marie, 6280 Gerpinnes (BE)
(74) Mandataire: Plucker, Guy

(57) **Abrégé**

L'invention consiste à établir une relation permanente et indélébile entre, d'une part, les trois variables qui déterminent l'image originale du sujet lors de l'acquisition (134) de l'image radiographique numérique que sont l'orientation du patient (133), la position de rotation horaire de la cassette (132) et la position de rotation horaire du support radio-sensible, et d'autre part, les paramètres d'acquisition de chaque examen (131) radiographique tels qu'ils sont encodés dans les champs DICOM (135), grâce à un procédé original de marquage numérique de l'image (136), lequel sera mis en corrélation (137) avec les algorithmes d'acquisition de l'image afin d'identifier de façon permanente et formelle la latéralité (138) de l'image examinée, détecter (139) et corriger (143) automatiquement les erreurs éventuelles de manipulations commises dans le pré-processing ou dans le post-processing de l'image radiographique numérique.

## Description

### DOMAINE DE L'INVENTION :

L'invention concerne le domaine de la détection et la correction d'erreurs de positionnement et d'identification de latéralité de l'image radiographique numérique.

### ETAT DE LA TECHNIQUE ANTERIEURE :

Depuis très longtemps les utilisateurs de l'image radiographique ont été soucieux de permettre une identification exacte de la position de la radiographie afin de garantir pour des raisons de qualité et de sécurité que l'image proposée reproduisait exactement la latéralité de la structure anatomique radiographiée.
De nombreux dispositifs ont été proposés pour tenter de répondre à ce problème en radiographie argentique, mais l'apparition de l'image radiographique numérique qui rend très aisée la manipulation de l'image a multiplié considérablement les risques d'erreurs. Les marqueurs externes et radio-opaques de latéralité tels qu'ils sont utilisés en radiographie argentique continuent d'être utilisés également en radiographie numérique et n'apportent que peu de garantie puisqu'ils rencontrent les mêmes sources d'erreurs. Les marqueurs radio-opaques liés à l'utilisation des écrans renforçateurs en radiologie argentique ne sont pas applicables à la radiologie numérique ; la radiologie numérique comporte le système d'acquisition par écrans photostimulables dits écrans à mémoire qui présentent une similitude de manipulation avec le système argentique, mais comporte également les systèmes très différents que sont l'acquisition radiographique numérique par capteurs directs et l'acquisition par l'intermédiaire d'un amplificateur de brillance.
Une approche de solution intéressante a été décrite par Hufe WO 0135085 qui propose un marqueur d'orientation de l'image numérique : ce marqueur numérique asymétrique ajouté à l'image originale permet de suivre les manipulations de ladite image par incréments de 90° et les manipulations d'inversion symétrique desdites images ; ce système apporte une solution correcte dans les manipulations de l'image au cours de la phase de post-processing, c'est à dire à partir d'une image dite image originale.

### RESUME DE L'INVENTION :

Le problème essentiel à résoudre est celui de corriger les erreurs de latéralité du positionnement de l'image radiographique ; pour y parvenir nous devons mettre en place des moyens de détection et des moyens de correction. Nous décrivons une méthode permettant de suivre les étapes de manipulations des images radiographiques numériques après leur création, c'est à dire dans le post-processing, ce qui est important pour toute l'édition sur film ou la distribution sur écran des images dans un système PACS par exemple, mais ce n'est pas suffisant, nous devons également vérifier la validité de l'image originale elle-même, ce que ne permet pas le procédé de Hufe WO 0135085 et c'est une défaillance de ce système ; une des particularités de mon invention est de mettre en place une méthode et des moyens de vérification de la validité des images originales elles-mêmes, avec détection des erreurs puis correction de ces erreurs de latéralité, en mettant à la disposition des utilisateurs une identification permanente et indélébile de latéralité de l'image radiographique numérique.

Le principe innovant et fondamental de mon invention consiste à établir une relation constante et indélébile entre les paramètres constitutifs de la création de l'image radiographique numérique ; ces paramètres dépendent de trois facteurs variables qui déterminent l'image numérique dans le cas d'acquisition indirecte au moyen d'écrans à mémoire (dits écrans au phosphore ou IP dans le texte et les figures) : 1) l'orientation du patient par rapport au statif contenant la cassette ; 2) la position de la cassette à l'intérieur du statif ; 3) la position de l'IP à l'intérieur de ladite cassette. Le moyen original mis en oeuvre est un marqueur numérique placé après l'acquisition radiographique à un endroit fixe et définitif sur l'image brute, c'est à dire celle qui est issue de la lecture numérique de la « data base image », avant toute manipulation, et en outre j'associe par un lien indélébile et permanent ladite position du marqueur aux paramètres de l'orientation du patient, de la position de la cassette et la position de l'IP. Ce lien logique permanent entre ces variables est partiellement contenu dans les champs DICOM de l'imagerie numérique : en effet, pour chaque incidence radiographique sont encodés dans les champs DICOM les valeurs appropriées non seulement pour les algorithmes de traitement de l'image numérique elle-même, mais aussi tous les algorithmes relatifs à l'orientation du patient et la position de la cassette dont le système dédicacé doit tenir compte pour effectuer une mise en page correcte de chaque image soit sur film, soit sur écran.
Les paramètres relatifs au patient sont l'orientation dite Antéro-postérieur lorsque le faisceau des rayons X traverse la région anatomique de l'avant vers l'arrière, et l'orientation dite Postéro-antérieure lorsque ledit faisceau traverse la région anatomique de l'arrière vers l'avant. Ces valeurs sont des données de base qui figurent dans les champs DICOM de chaque incidence.
La position verticale ou transversale de chaque incidence se trouve également dans les champs DICOM, mais attendu que dans chacun de ces deux cas la cassette peut être placée de deux façons, si on tient compte du côté de l'ouverture de ladite cassette par exemple ; ceci représente donc quatre possibilités qui ne figurent pas dans les champs DICOM qui n'en contiennent que deux ; mais ces valeurs de positions de la cassette sont prises en compte par les systèmes dédicacés de lecture des « data image » comme étant positionnée conventionnellement « à l'endroit » afin que l'image anatomique normale puisse être restituée sur film ou sur écran.
La position de l'IP à l'intérieur de la cassette est constante entre le moment de l'acquisition radiographique et la lecture de l'image et dans le système dédicacé : en conséquence, cette variable disparaît donc.
Nous obtenons donc huit variables auxquelles nous attribuons une référence dans la description logique puisque, car pour chacune d'elle, le marqueur numérique sera placé de façon permanente à un endroit différent et propre à chacune des huit situations cliniques possibles : c'est ce procédé original qui me permet de distinguer l'image normale et les erreurs.
Dans ces circonstances, toute manipulation effectuée dans le post-processing sera évidemment reconnue.

Contrairement à ce qu'affirme Hufe WO 0135085, l'utilisation d'un marqueur numérique de forme symétrique convient parfaitement à déterminer la latéralité de l'image numérique ainsi que je le démontre dans mon invention ; l'utilisation d'un marqueur numérique de forme asymétrique est également possible.
Différents procédés de marquage peuvent être employés à condition d'altérer le moins possible ou pas du tout l'image numérique, tels que un Cryptage sous format JPG, un Watermarking de latéralité, un marquage périmétrique localisé, un procédé de calque ou image virtuelle sur laquelle sera placé le marqueur numérique, ce qui présente l'avantage de ne pas dégrader l'image proprement-dite et d'être disponible à tout moment ; ce marqueur numérique détermine une valeur d'identification de latéralité qui sera elle-même archivée dans un champ DICOM ; ceci présente le grand avantage que cette valeur puisse être utilisée pour positionner correctement et/ou l'afficher l'identification de latéralité sur l'image elle-même, et cela, sous forme de n'importe quel graphisme, n'importe quel langage, n'importe quel endroit de l'image ; cet affichage de latéralité présente également l'avantage d'être indépendant de la densité tissulaire de l'organe examiné, de dose du faisceau de rayons X, de la collimation du faisceau des rayons X ou du recadrage à posteriori de l'image elle-même, car l'application de l'affichage a lieu après la phase d'acquisition radiographique elle-même.

Mais nous devons vérifier la validité de l'image originale elle-même : dans tous les cas de pratique normale telle que décrite plus haut, l'identification de latéralité sera vérifiée. Mais si une ou plusieurs erreurs sont commises simultanément et sans modification adéquate des algorithmes sélectionnés pour la phase d'acquisition appelée «phase de pré-processing », le système risque de ne pas identifier certaines erreurs : c'est pourquoi je propose la mise en place de systèmes automatiques détection de la position des cassettes et de détection de l'orientation du patient de façon à disposer des informations exactes relatives aux conditions physiques réelles de l'acquisition de l'image ; cette façon de procéder nous permet de disposer des informations exactes, y compris en l'absence d'encodage desdites modifications par le manipulateur.

Les erreurs commises dans le pré-processing peuvent provenir d'une discordance entre les conditions physiques réelles de l'acquisition d'image et les valeurs DICOM des paramètres optés pour la réalisation de l'examen : nous allons donc décrire des méthodes et dispositifs originaux de détection des erreurs de l'orientation du patient et de position de la cassette.

Les méthodes et procédés de détection de l'orientation du patient sont basés sur des systèmes biométriques d'une part, des systèmes optiques d'autre part.
Un système original de détection de l'orientation d'un patient est basé sur les méthodes biométriques de détection de la fonction cardiaque en utilisant les procédés radar, IR, ultrasons, ondes RF de détection et localisation, en particulier par la mise en oeuvre des systèmes connus de détection à distance et sans électrode de l'onde R de l'électrocardiogramme, tout en adaptant le nombre d'antennes de détection aux circonstances anatomiques de l'examen, de façon telle que l'analyse des différences d'amplitude des signaux puisse identifier formellement la position ventriculaire ; ces procédés biométriques ont une validité limitée par l'existence de cardiopathies malformatives telles que la dextrocardie par exemple.
Une autre particularité inventive de mon procédé consiste à utiliser une détection optique de l'orientation du patient (DOP) en réalisant une acquisition photographique systématique de une ou plusieurs images en lumière blanche ou en IR lors de chaque examen radiographique, de telle façon que l'image photographique soit d'une part archivée et disponible en permanence pour un contrôle de latéralité de l'image et soit d'autre part traitée par programme de reconnaissance humaine et faciale dans le but d'archiver formellement l'orientation Antéro-postérieure ou Postéro-antérieure du patient ; dans les cas limites où la reconnaissance de forme est en difficulté pour des raisons techniques, il peut toujours être fait appel éventuellement automatiquement à l'affichage de la photographie réelle sur le même support que l'image radiographique numérique pour contrôle visuel complémentaire et de validation définitive de latéralité. Certaines méthodes biométriques et optiques peuvent en outre être utilisées simultanément.

Les méthodes et procédés de détection de la position de la cassette concernent deux situations techniquement très différentes.
Dans la première situation envisagée, la cassette est utilisée sans statif, sans liaison physique, mécanique ou électrique éventuelle avec un statif ; cette situation se produit pourtant très souvent, à savoir en particulier pour tous les examens réalisés au lit du malade, dans le service d'imagerie médicale ou à distance de celui-ci, par exemple dans les services d'urgences et de soins intensifs. Dans cette première situation, je propose un système tout à fait original de détection de position de la cassette faisant appel à la technique de RFID, identification à distance par radiofréquence : je propose la mise en place d'un lecteur de proximité RF Emetteur-Recepteur sur le système de collimation du tube radiogène, localisé à un angle et focalisé sur une zone dans laquelle se trouve un des angles de la cassette et sur ledit angle est fixé un Tag lequel réémet vers l'antenne réceptrice RF focalisée le signal du code permettant d'identifier la position de ladite cassette. Cette technique peut en outre trouver une nouvelle application et recevoir directement les informations d'identité au lit du patient de façon à réduire le risque des erreurs.

Dans la seconde situation, la cassette est utilisée dans un statif ou modalité radiographique : de nombreux procédés connus sont actuellement utilisés pour identifier le l'orientation verticale ou transversale de la cassette, mais à cette information, nous devons nécessairement ajouter la position exacte du côté de ladite cassette pris pour référence du début de l'image numérique encodée : le procédé original que je propose consiste à utiliser un système de détecteurs positionnés de telle façon qu'ils permettent de localiser un élément à détecter placé sur la cassette de manière telle que l'orientation de l'ouverture de ladite cassette soit repérable dans la position tant verticale qu'horizontale de la cassette ; les moyens mécaniques, magnéto-optiques, IR, codes barre sont connus et utilisables ; je propose un système original de lecteur de proximité RFID : un transpondeur RF est fixé à un angle de la cassette et quatre émetteurs-récepteurs RFID sont placés dans le statif et disposés de façon telle que le transpondeur passe devant le lecteur de proximité RF qui correspond à la position de la cassette ; le transcodeur unique reçoit l'onde RF et réémet le code qui est identifié par l'antenne réceptrice RF et transmis à l'ordinateur dont le programme calcule et enregistre la position exacte de la cassette dans le système de Détection de la Position de la Cassette (DPC).
Grâce à mon procédé original qui réduit à deux variables la relation permanente entre les circonstances physiques d'acquisition de l'image numérique et les «data image » de la radiographie proprement-dite, je puis établir une similitude des paramètres de constitution de latéralité de l'image originale entre le système d'acquisition d'images radiographiques par le procédé indirect au moyen de capteurs à mémoire, le système par capteurs directs et le système de capture par amplificateur de brillance ; en conséquence, les méthodes de détection et correction des erreurs de latéralité s'appliquent également à l'image acquise par capteurs directs ou par amplificateurs de brillance.

La mise en oeuvre d'analyse de l'image numérique et du marqueur de latéralité tel que décrit permet donc bien de vérifier la validité des images acquises dans les conditions normales et permet de détecter et corriger les erreurs de latéralité même dans las cas où des erreurs de manipulations ont été commises et n'ont pas été encodées comme telles dans le système de traitement de l'image. Le contrôle visuel de latéralité de l'image reste possible à tous les stades de traitement de l'image acquise dans les conditions normales grâce à mon procédé original de corrélation du marqueur numérique avec les algorithmes DICOM de l'acquisition de ladite l'image.

L'ensemble des méthodes décrites et dispositifs proposés permet donc de vérifier la validité dans la phase de pré-processing de l'image originale elle-même et de détecter et corriger toute erreur de manipulation de l'image radiographique numérique au cours du post-processing.

### BREVE DESCRIPTION DES FIGURES :

Les figures ne sont pas exécutées à l'échelle. En général, le même objet se retrouvant dans différents dessins portera la même référence.
Fig. 1 décrit les conditions générales d'acquisition de l'image radiographique numérique
Fig. 2 décrit les paramètres variables des conditions cliniques d'acquisition de l'image radiographique numérique.
Fig. 3 décrit l'algorithme général du système d'identification de latéralité de l'image radiographique numérique avec détection et correction automatique des erreurs.
Fig. 4 décrit l'algorithme du système de latéralité de l'image radiographique numérique sans détection ni correction automatique des erreurs.
Fig. 5 décrit les positions théoriques et les positions réelles des marqueurs sur la surface radio- sensible, par rapport à la position physique du support radio-sensible tel qu'il sera lu par le système dédicacé.
Fig. 6 décrit la corrélation entre la position réelle des marqueurs de la surface radio sensible au moment de l'acquisition radiographique et la position de ce marqueur sur l'image radiographique en fonction des 8 situations cliniques différentes rencontrées : les 4 positions verticales de la cassette.
Fig. 7 décrit la corrélation entre la position réelle des marqueurs de la surface radio sensible au moment de l'acquisition radiographique et la position de ce marqueur sur l'image radiographique en fonction des 8 situations cliniques différentes rencontrées : les 4 positions horizontales de la cassette.
Fig. 8 décrit la corrélation entre la position réelle des marqueurs de la surface radio sensible au moment de l'acquisition radiographique pour chaque orientation du patient et chaque rotation de la cassette par incrément de 90°.
Fig. 9 décrit l'algorithme d'application du marqueur numérique sur l'image radiographique
Fig. 10 décrit la méthode d'analyse du marqueur sur l'image radiographique numérique en commençant par la localisation dudit marqueur.
Fig. 11 décrit la méthode d'analyse du marqueur sur l'image radiographique numérique en commençant par l'orientation du patient au cours de l'examen.
Fig. 12 décrit la méthode visuelle d'analyse de latéralité.
Fig. 13 décrit un système de détection automatique de l'orientation du patient (DOP) par reconnaissance biométrique de latéralité.
Fig. 14 décrit un système de détection automatique de l'orientation du patient (DOP) par reconnaissance optique de latéralité.
Fig. 15 décrit un système de détection automatique de la position de la cassette dans un statif (DPC) par reconnaissance électromagnétique.
Fig. 16 décrit un système de détection automatique de la position de la cassette en l'absence d'utilisation d'un statif (DPC) par identification de latéralité au moyen d'émetteur-récepteur à hyperfréquence.

### DESCRIPTION DETAILLEE DE MODES DE REALISATION PARTICULIERS :

L'originalité de l'invention consiste à établir une relation permanente et indélébile entre les paramètres qui déterminent l'acquisition de l'image radiographique originale, à savoir la position anatomique du patient, la position de la cassette contenant la surface radio-sensible et la position de ladite surface radio-sensible, et l'image numérique telle qu'elle est décodée des données brutes, grâce à la mise en place d'un marqueur numérique sur ladite image brute, procédé qui permettra de suivre toutes les manipulations de l'image numérique par référence aux algorithmes d'acquisition de l'image qui sont disponibles dans les champs DICOM du système de traitement de l'image numérique ; ce procédé est en outre complété de dispositifs de détection et correction des erreurs qui peuvent être automatisés.

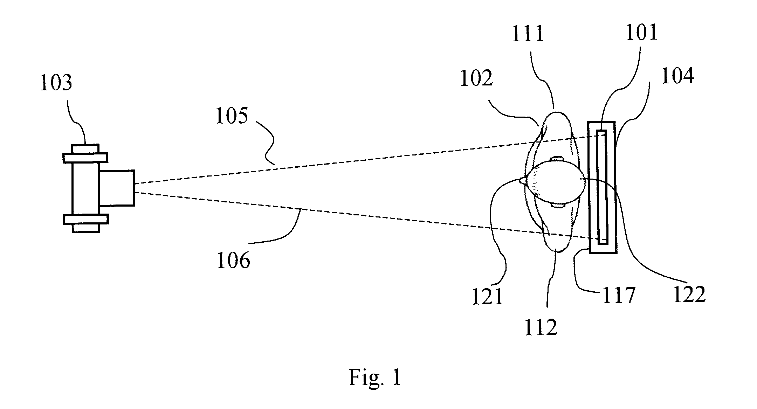

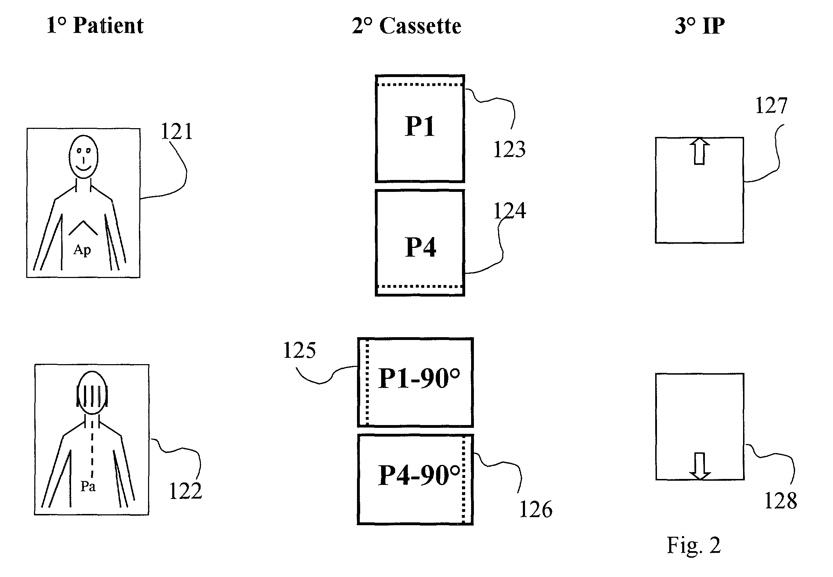

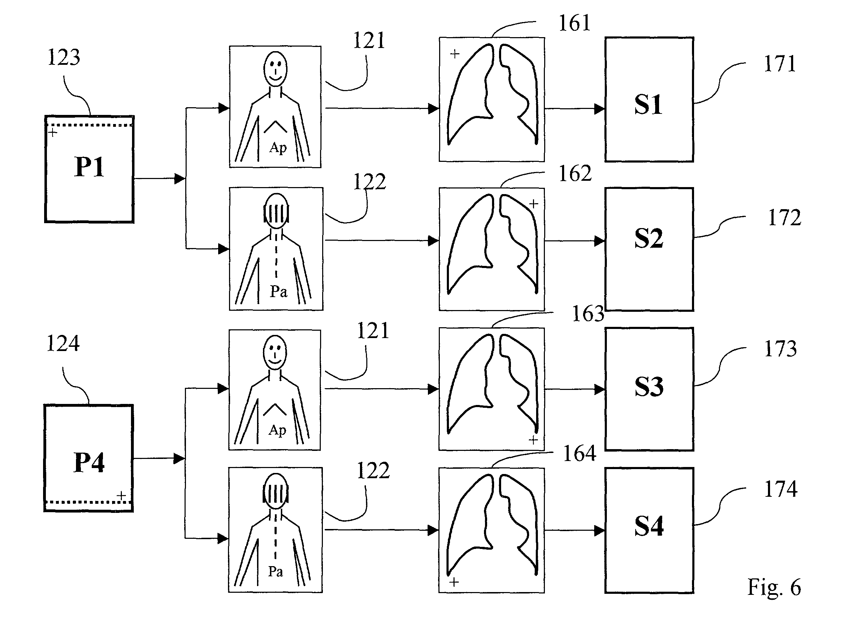

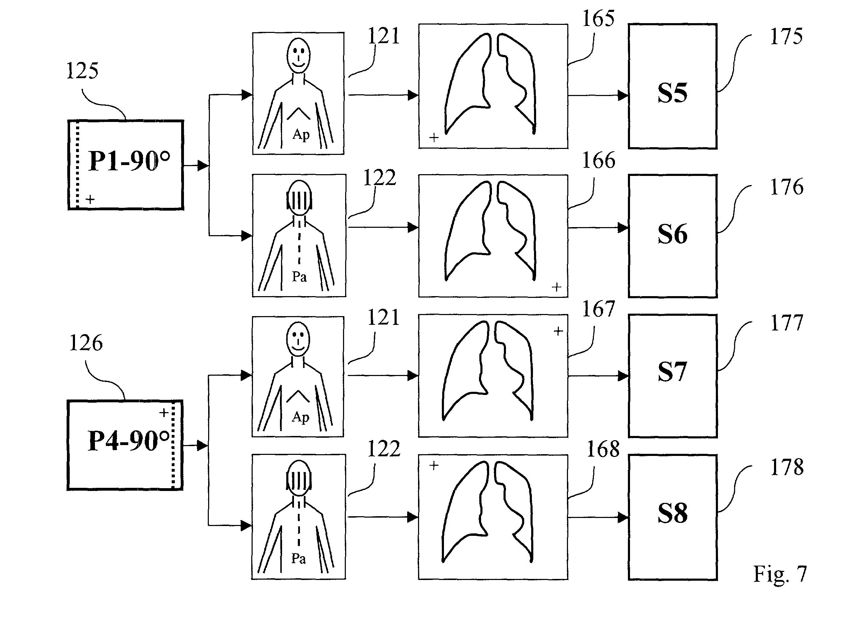

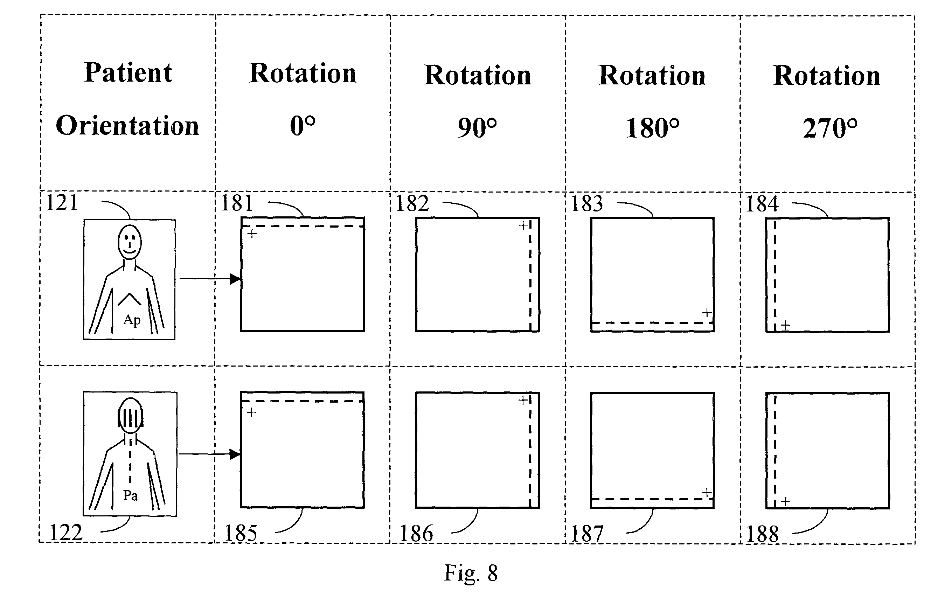

Les conditions générales d'acquisition de l'image sont résumées sur la Fig. 1, le patient 102 est situé en face du tube radiogène 103 et placé devant un statif 104 contenant une cassette 101 dans laquelle est placée la surface radio-sensible dans le champ du faisceau radiogène 105, 106.
L'étude des paramètres de l'acquisition de l'image originale Fig.2 montre que le patient 121 est orienté vers la source radiogène 103 et l'incidence est classiquement appelée Antéro-postérieure (« Ap » dans le texte) Fig. 2, 121 ; dans le cas contraire, si le dos du patient 122 est orienté vers la source radiogène l'incidence est appelée Postéro-antérieure (« Pa » dans le texte).
La cassette de format rectangulaire ou de format carré peut être placée verticalement ou transversalement si on tient compte de son système d'ouverture ; conventionnellement, nous considérons que la position de la cassette dont l'ouverture est dirigée vers le haut 123, s'appelle « P1 » et représente la position normale par rapport à un patient en station verticale ; la cassette dont l'ouverture est dirigée vers le bas 124 s'appelle « P4 » et représente une erreur de positionnement ; la cassette 125 dont l'ouverture se trouve du côté gauche du statif 104 vu depuis la source radiogène 103, s'appelle « P1 - 90° » ; la cassette 126 dont l'ouverture se trouve du côté droit du statif 104 vu depuis la source radiogène 103, s'appelle « P4 - 90° » ; en outre, est considérée comme en position normale la cassette transversale dont l'ouverture est située du côté droit du patient et considérée comme une erreur de positionnement la cassette transversale dont l'ouverture est située du côté gauche du patient. Toute autre convention est possible et le système est applicable après adaptation à une nouvelle convention, si par exemple on décrit les positions de la cassette au moyen d'une rotation par incrément angulaire de 90° comme représenté à la Fig. 8, 181 à 188.
La position relative de la surface radio-sensible, aussi appelée Image Plate (IP), est soit dirigée vers le haut 127 par rapport à l'ouverture de la cassette ; elle peut être considérée comme étant dirigée vers le bas 128.
Ces deux paramètres relatifs au patient 121, 122, les quatre paramètres relatifs à la cassette 123, 124, 125, 126, et les deux paramètres relatifs aux IP 127, 128 donnent théoriquement seize possibilités à examiner ; attendu que dans les conditions normales d'examen radiographique l'IP se trouvant dans la cassette pendant l'exposition radiographique garde la même position relative à la cassette jusqu'à la phase de lecture des «data image » par le système dédicacé de traitement d'image numérique et cette relation étant constante, nous pouvons ignorer la variable 128, ce qui ramène à huit les possibilités à étudier et décrites plus loin Fig.6 et Fig.7.
Dans le cas d'acquisition d'image par capteur direct (Flat Panel ), la relation entre le support mécanique et la surface radio-sensible est constante et les paramètres d'acquisition de l'image se réduisent à l'orientation du patient et la sélection de la position de la surface radio-sensible : en effet l'utilisation tête-pieds de l'orientation normale du statif représente la situation dans laquelle la tête du patient est orientée vers le haut dudit statif et l'orientation pieds-tête représente l'utilisation occasionnelle dudit statif dans les cas où le patient est disposé à 180° par exemple dans les cas d'utilisation interventionnelle de certains statifs : dans cette situation, un commutateur sur le pupitre de commande est généralement utilisé pour modifier la présentation de l'image de radioscopie sur l'écran et cette commutation est nécessaire et suffisante pour indiquer au système numérique le choix des paramètres en cas de modification des conditions habituelles d'utilisation d'un statif fonctionnant en acquisition numérique directe ou par amplificateur de brillance ; l'utilisation d'e capteurs directs comporte également en général la sélection de la position verticale (« Portrait ») ou transversale (« Paysage ») des capteurs qui sera archivée dans le système DICOM
Dans le cas d'acquisition d'image par l'utilisation d'un amplificateur de brillance, la capture d'images répond aux mêmes paramètres d'utilisation que pour les capteurs directs d'image numérique et le procédé décrit dans mon brevet trouve toute son application dans ces deux méthodes radiographiques également.

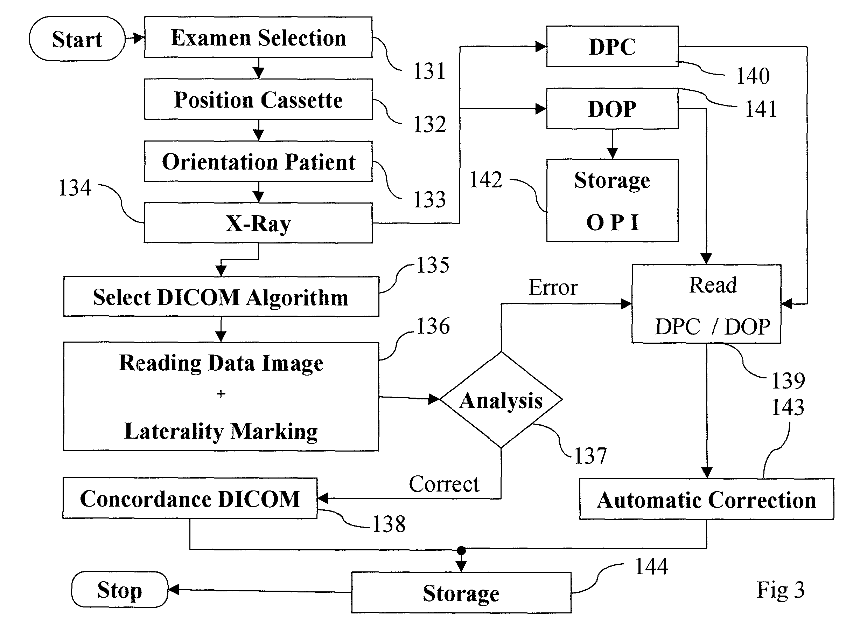

Nous examinons le déroulement du processus habituel de traitement d'image Fig. 3 et nous appliquons le marquage numérique de l'image.

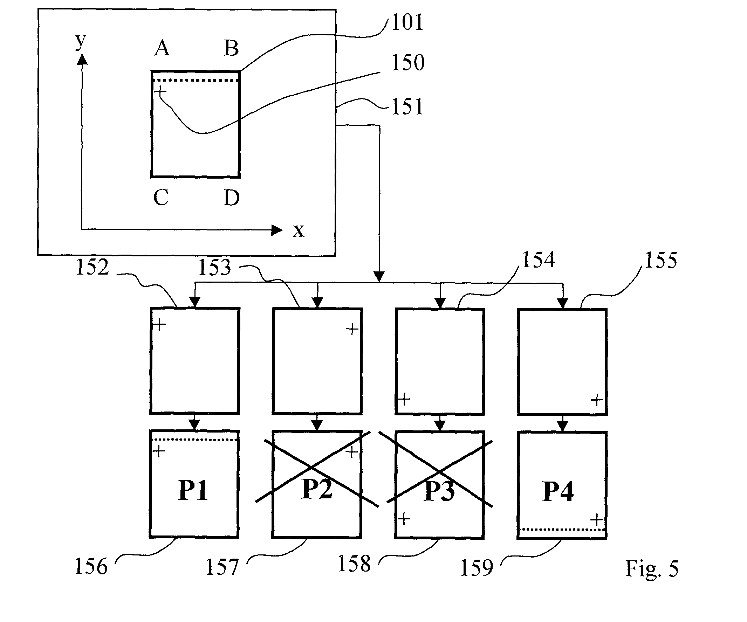

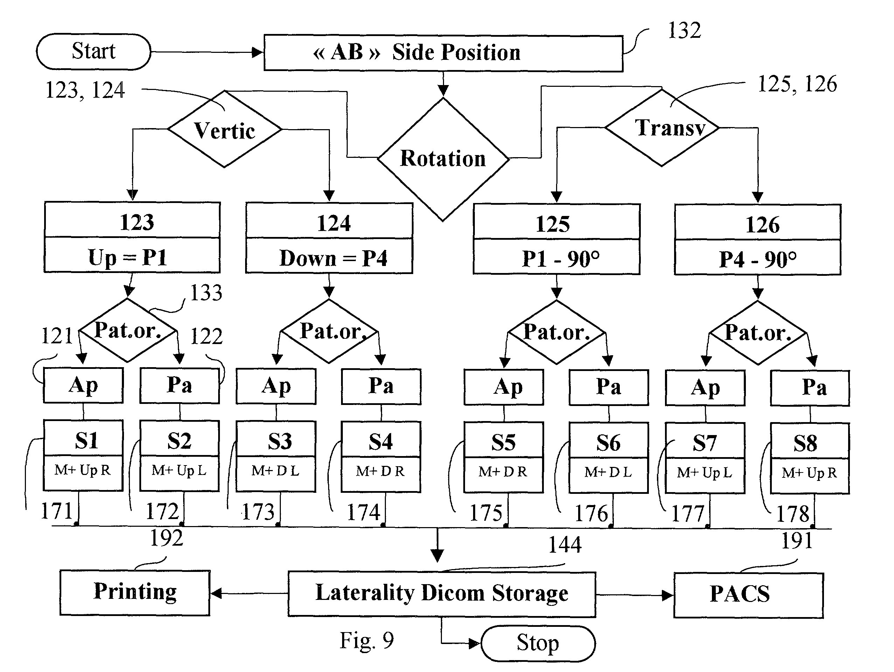

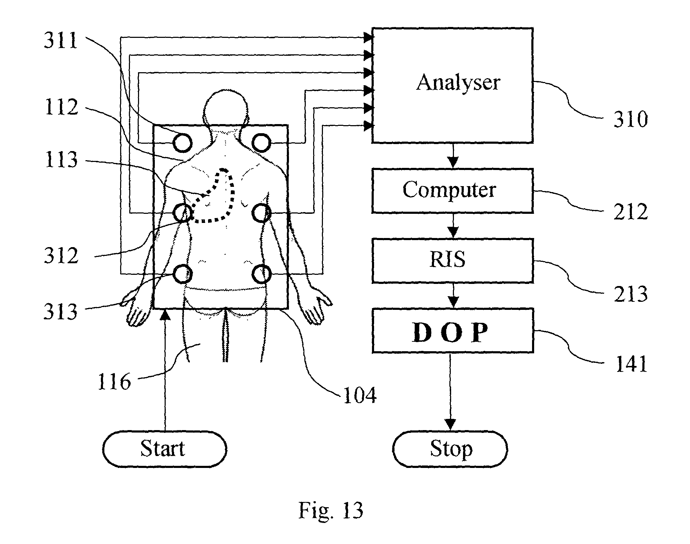

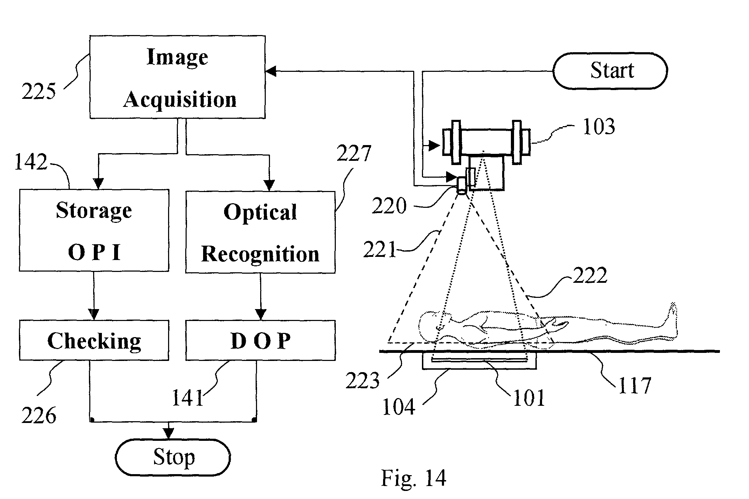

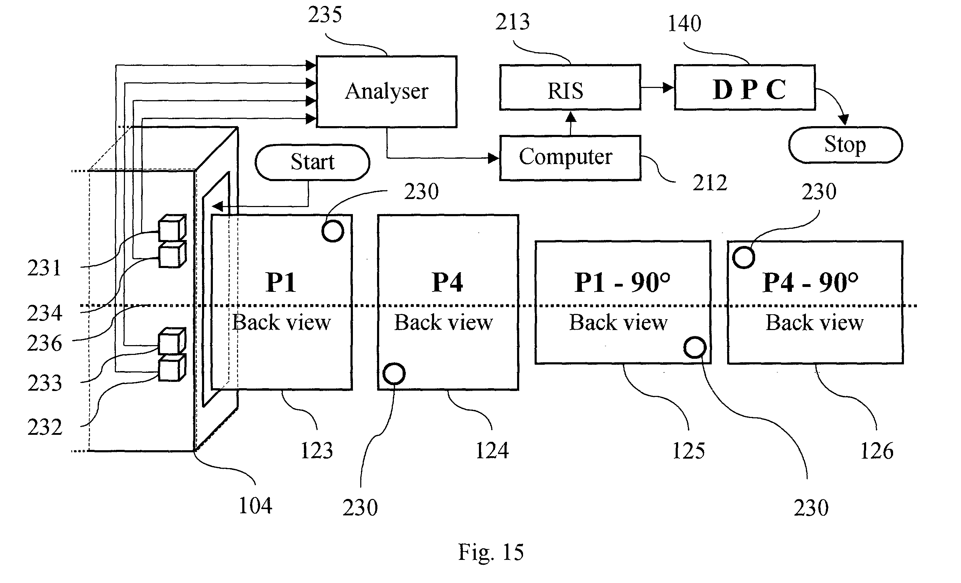

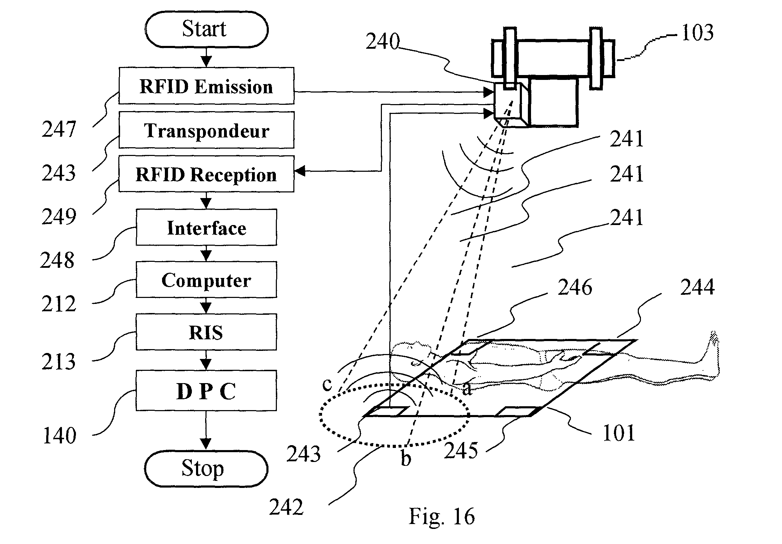

La séquence débute par le choix d'une incidence radiographique 131 à réaliser comme en Fig. 3, : les informations relatives à chaque examen radiographique numérique sont contenues dans les champs DICOM appropriés en vue du traitement de l'image par le système dédicacé ; la position normale de la cassette 132 est référencée dans les algorithmes de traitement en vue du positionnement adéquat de l'image sur film et/ou sur écran ; l'orientation normale du patient 133 est référencée dans les algorithmes de traitement de l'image en vue de l'orientation adéquate de l'image sur film et/ou sur écran ; le manipulateur applique donc les directives particulières à chaque examen en ce qui concerne la mise en place de la cassette et du patient, puis intervient l'exposition radiographique proprement-dite 134 ; ainsi que cela est bien connu dans la pratique courante, l'opérateur procède à la sélection définitive des algorithmes DICOM de l'examen en effectuant une liaison avec les références d'identité du patient soit par encodage manuel, soit par procédure automatisée faisant appel à la technique bien connue HIS - RIS ; le support radio-sensible est introduit dans le lecteur dédicacé 136 et à ce moment intervient l'application du procédé de marquage de l'image numérique. Simultanément à l'exposition radiographique nous proposons la mise en oeuvre d'un dispositif automatique de Détection de la position de la Cassette 140 (DPC), décrit plus loin Fig. 15 et Fig. 16, et la mise en oeuvre automatique d'un dispositif automatique de Détection de l'Orientation du Patient 141 (DOP), décrit plus loin Fig. 13 et Fig. 14.
Nous verrons également plus loin la localisation du marquage Fig. 5 et l'algorithme d'application du marqueur numérique sur l'image radiographique proposé à titre d'exemple Fig. 9.
Nous continuons la description de l'algorithme général Fig.3.
Après marquage numérique de latéralité de l'image 136, nous procédons à une analyse 137 afin de vérifier la concordance entre les algorithmes DICOM sélectionnés pour l'examen et les conditions réelles du déroulement de l'examen dans le but de détecter les erreurs éventuelles.
En cas de concordance 138 de l'analyse de l'image marquée avec les algorithmes sélectionnés, nous procédons au stockage définitif 144 des paramètres de latéralité obtenus par l'application du marquage numérique de latéralité ; en cas d'erreur et discordance entre l'analyse de l'image et les algorithmes sélectionnés, nous procédons à la lecture 139 des systèmes automatiques de Détection de la Position de la Cassette 140 (DPC) et à la lecture des systèmes automatiques de Détection d'orientation du Patient 141 (DOP) ; ces deux systèmes automatiques peuvent nous informer de la détection d'une erreur et en outre peuvent nous permettre d'appliquer la correction automatique de latéralité 143 de l'image radiographique numérique, et enfin procéder au stockage définitif 144 de latéralité corrigée, selon la méthode qui est exposée plus loin.

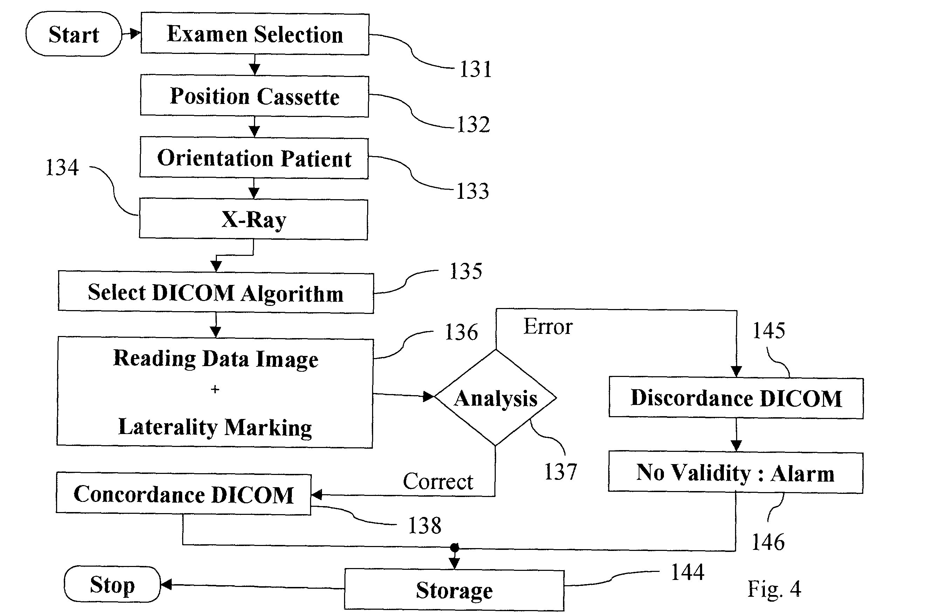

Si on ne dispose pas des systèmes automatiques de détection et correction des erreurs, le système d'identification numérique de latéralité permet de garantir à 100% l'exactitude de latéralité de l'image radiographique numérique acquise dans les conditions «normales » de positionnement des cassettes et du patient telles qu'elles ont été décrites plus haut : Fig. 4, 137 : l'analyse de l'image marquée sera dans ces cas-là toujours en concordance avec les algorithmes DICOM 138 et le stockage automatique des informations de latéralité pourra être effectué.
En cas d'erreur commise dans le pré-processing, donc exécutée au cours du placement soit de la cassette, soit du patient, sans modification adéquate du choix des algorithmes sélectionnés, mon invention permet de détecter une discordance 145 entre les informations obtenues sur l'image marquée et les algorithmes de traitement de l'image et éventuellement pourra transmettre une alarme avec invalidation de la latéralité ; si plus d'une erreur est commise au cours de la même acquisition, le système risque dans certains cas de ne pas pouvoir détecter l'erreur, ce qui justifie la proposition originale de nouveaux dispositifs automatiques de détection et correction d'erreurs décrits plus loin.
En cas d'erreur commise dans le post-processing, comme nous le verrons plus loin, dans tous les cas d'une ou plusieurs erreurs commises, mon système de marquage numérique de l'image permet de détecter 100% des erreurs de manipulation de l'image originale et permet d'obtenir la traçabilité des manipulations.

Nous examinons la localisation du marquage numérique de latéralité Fig. 5, dans laquelle la surface 101, représente symboliquement une cassette et/ou support radio-sensible pour toute la suite de l'exposé ; cette cassette peut avoir quatre côtés de dimensions identiques ou des côtés égaux deux à deux ; le côté « AB » représente conventionnellement l'ouverture de la cassette par conséquent la première zone contenant les «data image » qui seront lues par le système dédicacé pour le cas d'écrans photostimulables dits écrans à mémoire, et ce côté représente la même zone du début de l'image pour le cas de détecteurs directs ; pour des raisons d'application du réflexe de lecture le plus usuel orienté sur le coin supérieur gauche de la surface de lecture, nous plaçons 150 le marqueur numérique de latéralité selon les coordonnées x,y du point 150 déterminées conventionnellement et définitivement pour chaque format de surface radio-sensible. Il découle de cette localisation 151 quatre hypothèses de visualisation de marqueur sur l'image résultante pour un format d'image déterminé : sur l'image brute 152 il apparaît au coin supérieur gauche, sur l'image brute 153 il apparaît au coin supérieur droit, sur l'image brute 154 il apparaît au coin inférieur gauche et sur l'image brute 155 il apparaît au coin inférieur droit ; nous entendons par image brute l'image qui n'a subi aucune modification d'inversion sur son axe vertical, ni sur son axe transversal, ni aucune rotation ; en réalité, attendu que la cassette est introduite dans le lecteur d'une seule et unique manière, la lecture des «data image » débutera toujours sur la même zone de l'image brute et le repère sera toujours visualisé comme positionné sur l'image brute 152. Attendu que la cassette dans sa position normale verticale Fig.2, 123, est placée avec son côté « AB » en haut, sur l'image résultante 156 le repère figure sur les mêmes coordonnées que 150 et donc en haut et à gauche de l'image située en face de l'examinateur ; si la cassette est placée par erreur Fig. 2, 124,sur l'image résultante Fig. 5, 159 après correction de 180° de rotation -automatique ou manuelle- le repère figure en bas et à droite de l'image située en face de l'examinateur ; attendu que la cassette ne peut être introduite que d'une seule manière dans le lecteur, la localisation des repères sur l'image brute en 153 et 154 avec images résultantes 157 et 158 est IMPOSSIBLE en l'absence de manipulation numérique de l'image : il découle de cette constatation que toute image 156 est la représentation d'une radiographie obtenue sans modification d'inversion de latéralité par rapport à l'image brute ; en corollaire l'image 159 qui est obtenue après rotation de 180° révèle une correction d'erreur de position de cassette qui pourra être utilisée dans le post-processing pour vérifier la traçabilité de manipulation des images radiographiques numériques.
Il va de soi que les coordonnées x,y de localisation du marqueur numérique peuvent représenter une ou plusieurs zones latérales généralement quelconques, et que le même raisonnement peut s'y appliquer moyennant adaptation des conventions.

Suite aux deux paramètres relatifs à l'orientation du patient et aux quatre paramètres relatifs à la position de la cassette décrits plus haut Fig. 2, analysons maintenant les huit situations cliniques différentes, soit quatre situations représentées Fig. 6 dans lesquelles la cassette est positionnée verticalement, soit quatre situations représentées Fig. 7 dans lesquelles la cassette est positionnée transversalement.

La lecture de l'algorithme Fig. 6 montre que si la cassette 123 est positionnée correctement vers le haut «P1 » et que le patient est orienté en incidence Antéro-postérieure « Ap » 121, le marqueur numérique sera encodé selon les coordonnées 150 et sur l'image radiographique apparaîtra au coin supérieur gauche de l'image en face de l'examinateur donc sur de coin supérieur droit de l'image radiographique 161, selon les conventions des règles de l'art en matière de lecture de l'image radiographique : nous appelons « S1 » cette situation clinique 171. La même position 123 de la cassette associée à la position 122 Postéro-antérieure « Pa » du patient montre que le marqueur 150 sur l'image brute 156 sera après inversion de l'image en application des algorithmes DICOM de position du patient 122 visible au coin supérieur droit de l'image située en face de l'observateur et donc au coin supérieur gauche de l'image radiographique : nous appelons « S2 » cette situation clinique 172. Si la cassette est utilisée en position erronée 124 appelée « P4 » et que le patient est orienté 121 « Ap », le marqueur numérique est encodé dans l'angle inférieur gauche par rapport à la position du patient et l'image brute devra subir une rotation de 180° comme est de 180° l'erreur de position de la cassette ; après correction manuelle ou automatique de cette erreur, le marqueur numérique est visible sur l'angle inférieur droit de l'image finale située en face de l'observateur et donc sur l'angle inférieur gauche de la radiographie : nous appelons « S3 » cette situation clinique 173. Si la cassette est utilisée en position erronée 124 appelée « P4 » et que le patient est orienté 122 « Pa » le marqueur numérique est encodé dans l'angle inférieur droit par rapport à la position du patient et l'image brute devra subir une rotation de 180° comme est de 180° l'erreur de position de la cassette ; après correction manuelle ou automatique de cette erreur, le marqueur numérique est visible sur l'angle inférieur gauche de l'image finale située en face de l'observateur et donc sur l'angle inférieur droit de la radiographie : nous appelons « S4 » cette situation clinique 174.

La lecture de l'algorithme Fig. 7 montre que si la cassette est positionnée transversalement 125 appelée « P1 - 90° » et que le patient 121 est orienté « Ap », le marqueur numérique se superpose en bas et à droite du patient ; le marqueur sera visible sur l'image radiographique 165 en bas et à droite du patient : nous appelons « S5 » cette situation clinique 175.
Si la cassette est positionnée transversalement 125 appelée « P1 - 90° » et que le patient est positionné « Pa » 122, le marqueur se superpose en bas et à gauche du patient, situation décrite comme erronée ; le marqueur sera visible sur l'image radiographique 166 en bas et à gauche du patient; nous appelons « S6 » cette situation clinique 176.
Si la cassette est positionnée transversalement 126 appelée « P4 - 90° » et que le patient est orienté « Ap » 121, le marqueur se superpose en haut et à gauche du patient, situation décrite comme erronée ; le marqueur sera visible sur l'image radiographique 177 en haut et à gauche du patient : nous appelons « S7 » cette situation clinique 177.
Enfin si la cassette est positionnée transversalement 126 appelée « P4 - 90° » et que le patient est orienté « Pa » 122, le marqueur se superpose en haut et à droite du patient ; le marqueur sera visible sur l'image radiographique en haut et à droite du patient : nous appelons « S8 » cette situation clinique 178.

Parmi les autres méthodes d'identification de la position de la cassette, la Fig. 8 montre la combinaison logique de l'orientation du patient et les positions de la cassette décrites par une succession de rotations horaires par incrément de 90°. Le principe décrit dans le brevet peut aisément être converti dans toute autre convention de représentation spatiale.

Examinons à présent l'algorithme décrit Fig. 9 permettant la description logique de localisation du marqueur numérique en utilisant les algorithmes DICOM liés au choix de l'examen réalisé.

En raison de la convention Fig. 5, 150 de localisation du marqueur par rapport au côté « AB » du support radio-sensible, nous utilisons Fig. 9,132 le départ de ce côté « AB » comme déterminant la position de la cassette. L'algorithme de rotation de la cassette contenu dans le champ DICOM sélectionné par le choix de l'examen détermine 123, 124 en position verticale ; si l'algorithme sélectionné est 123, la cassette est positionnée normalement et l'algorithme de l'orientation du patient contenu dans un champ DICOM sélectionné par le choix de l'examen détermine l'orientation « Ap » 121 ou « Pa » 122 ; l'option 121 « Ap » inscrite dans les algorithmes de l'examen sélectionné détermine la position relative du marqueur numérique en 171 dont nous avons vu Fig. 6 qu'elle correspond à la situation clinique décrite sous « S1 » dans laquelle le marqueur est localisé dans l'angle supérieur droit de l'image radiographique, alors que l'option 122 « Pa » inscrite dans les algorithmes de l'examen sélectionné détermine la position relative du marqueur numérique en 172 dont nous avons vu Fig. 6 qu'elle correspond à la situation clinique décrite sous « S2 » dans laquelle le marqueur est localisé dans l'angle supérieur gauche de l'image radiographique.
Si l'algorithme sélectionné est 124, la cassette est positionnée par erreur en « P4 » : l'option sélectionnée par l'orientation du patient 121 détermine la position relative du marqueur numérique en 173 dont nous avons vu Fig. 6 qu'elle correspond à la situation décrite sous « S 3 » dans laquelle le marqueur est localisé dans l'angle inférieur gauche de l'image radiographique numérique ; avec la même sélection de l'algorithme 124, l'association de l'algorithme 122 de l'orientation du patient détermine la position relative du marqueur numérique en 174 dont nous avons vu Fig. 6 qu'elle correspond à la situation décrite sous « S4 » dans laquelle le marqueur est localisé dans l'angle inférieur droit de l'image radiographique numérique.
Si l'algorithme de rotation de la cassette contenu dans le champ DICOM sélectionné par le choix de l'examen détermine 125 puisque la cassette est placée en position normale, l'algorithme de l'orientation du patient contenu dans le champ DICOM sélectionné par le choix de l'examen détermine l'orientation « Ap » 121, ce qui détermine la position relative du marqueur numérique 175 dont nous avons vu Fig. 7 qu'elle correspond à la situation clinique décrite sous « S5 » dans laquelle le marqueur est localisé dans l'angle inférieur droit de l'image radiographique ; si l'algorithme de position de la cassette 126 est associé à l'option 122 « Pa » inscrite dans les algorithmes de l'examen sélectionné, la cassette est également placée normalement et la position relative du marqueur numérique est située en 178 dont nous avons vu Fig. 7 qu'elle correspond à la situation clinique décrite sous « S8 » dans laquelle la marqueur est localisé dans l'angle supérieur droit de l'image radiographique.
Si l'algorithme de rotation de la cassette contenu dans le champ DICOM sélectionné par le choix de l'examen détermine 125 et que par erreur le patient est orienté 122 « Pa », la position relative du marqueur numérique sera 176 dont nous avons vu Fig.7 qu'elle correspond à la situation clinique décrite sous « S6 » dans laquelle le marqueur est localisé dans l'angle inférieur gauche de la radiographie ; si l'algorithme de position de la cassette 126 et que par erreur le patient est orienté 121 « Ap », la position relative du marqueur numérique sera 177 dont nous avons vu Fig. 7 qu'elle correspond à la situation clinique décrite sous « S7 » dans laquelle le marqueur est localisé dans l'angle supérieur gauche de l'image radiographique.
Les différentes valeurs de latéralité 171 à 178 sont stockées dans un champ DICOM approprié 144, de façon à restituer l'information correcte de latéralité dans toutes les requêtes pour impression 192 ou affichage d'images radiographiques numériques 191.

A présent que tout l'algorithme de position du marqueur numérique est en place, reprenons la suite de la séquence de traitement de l'image radiographique numérique.

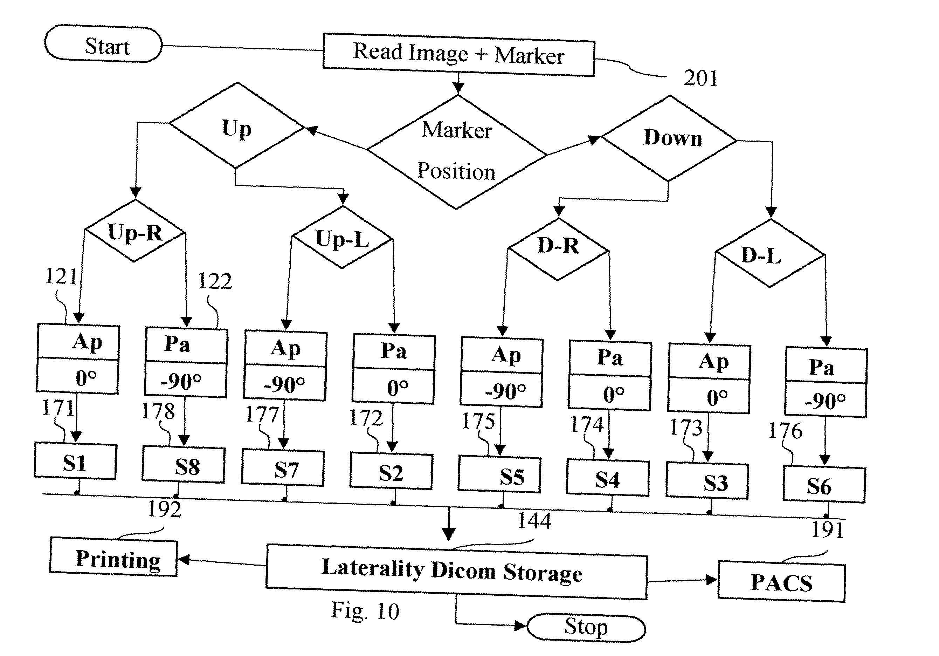

L'opérateur ensuite visualise pour contrôle l'image radiographique : il peut vérifier la latéralité de l'image radiographique par une analyse logique qui peut également être réalisée par l'ordinateur. Voici pour exemple différents procédés d'analyse numérique ou visuelle : la Fig. 10 démontre l'analyse logique ayant pour départ la position du marqueur sur l'image soit en haut « Up », soit en bas « Down » ; ensuite le deuxième niveau est la localisation soit à droite « R », soit à gauche « L » sur la radiographie, ; ensuite le troisième niveau est l'orientation soit 121 « Ap », soit 122 « Pa » , ce qui détermine chacune des huit situations cliniques différentes « S1 » à « S8 »dans lesquelles la position du marqueur a été clairement identifiée de 171 à 178 des Fig. 6 et Fig. 7.

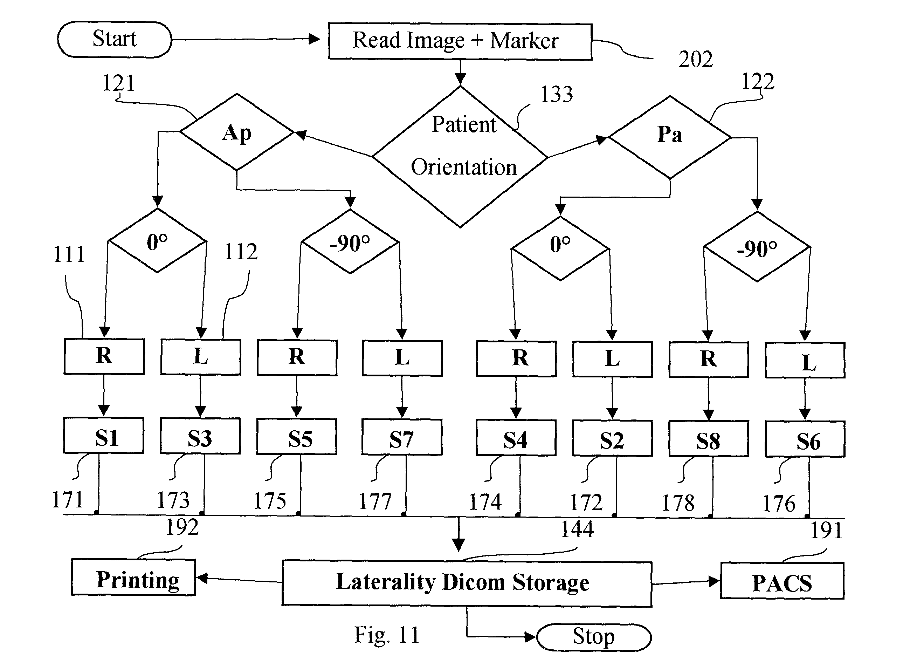

La Fig. 11 démontre l'analyse logique ayant pour départ l'orientation du patient : le premier niveau est déterminé par l'orientation du patient soit 121 « Ap », soit 122 « Pa » ; le deuxième niveau est déterminé par la rotation de la cassette soit de 0° pour les cassettes verticales 123 et 124, soit de 90° pour les cassettes transversales 125 et 126 ; le troisième niveau est déterminé par la localisation soit à droite « R » 111, soit à gauche « L » 112 du patient, ce qui montre la localisation que doit occuper le marqueur dans chacune des huit situations cliniques différentes « S1 » à « S8 » dans lesquelles la position du marqueur a été clairement identifiée de 171 à 178 des Fig 6 et Fig. 7.

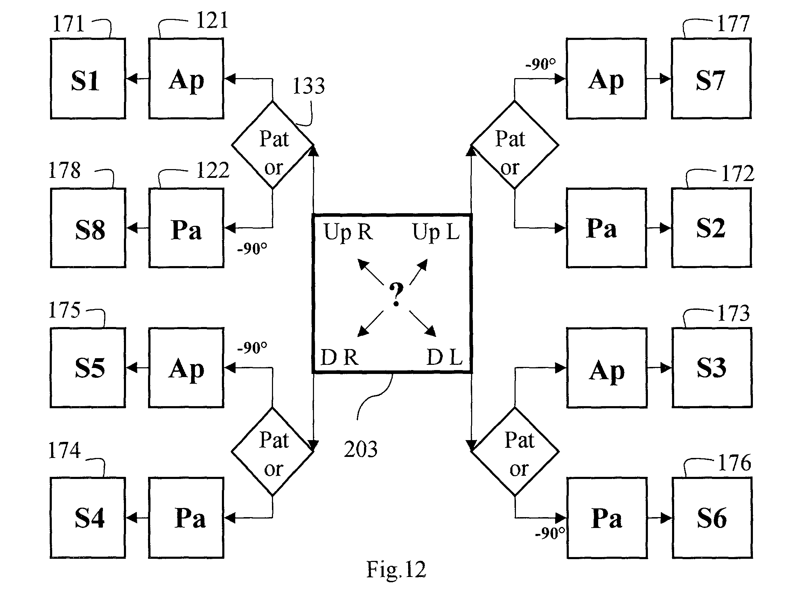

La Fig. 12 représente la reproduction de l'image en face de l'opérateur, soit sur film, soit sur écran montrant que la localisation de marqueur dans chacun des quatre angles correspond à deux situations cliniques distinctes chaque fois déterminée par l'orientation « Ap » 121 ou « Pa » 122 du patient ; la localisation du marqueur dans chacun des quatre angles correspond également à deux positions de rotation de la cassette de 0° 123 et 124 ou de 90° 125 et 126.

### Quelle forme de marqueur utiliser pour le marquage numérique ?

Nous pouvons utiliser indifféremment soit un marqueur numérique symétrique, soit un marqueur numérique asymétrique : toute la démonstration de mon brevet a été effectuée au moyen d'un marqueur symétrique associé aux algorithmes de traitement de l'image tels qu'ils sont contenus dans les champs DICOM ; il est tout à fait possible mais non indispensable d'utiliser un marqueur asymétrique dans les mêmes conditions d'exécution du procédé.
Un marqueur asymétrique de dimensions suffisamment grandes pour pouvoir lu et reconnu visuellement sur l'image par l'observateur présente l'avantage que procure une reconnaissance de forme : en l'absence de toute manipulation de l'image numérique, toute image acquise en incidence « Ap » Fig. 2,121 et position normale de la cassette présent un marqueur dont l'image est « droite », c'est à dire lisible directement et situé à droite du patient sur l'image radiographique « S1 » Fig. 6, 161 et « S5 »Fig. 7, 165 ; toute image acquise en incidence « Pa » Fig. 2, 122 et position normale de la cassette présente un marqueur dont l'image est « en miroir » « S2 » Fig. 6, 162 et « S8 » Fig. 7, 168 par rapport à l'image obtenue en « Ap » . Ce marqueur pour être reconnaissable doit être de dimension acceptable et présente le désavantage d'occuper une plus grande place sur l'image radiographique ; ceci toutefois sera peu gênant dans la pratique car d'une part le marqueur peut être placé à l'extrémité de l'angle qui est une zone n'offrant en général que peu d'intérêt, et d'autre part peut être affiché à la demande ou retiré de l'image radiographique à tout moment.

### Quel procédé de marqueur numérique utiliser ?

L'utilisation d'un marqueur numérique doit respecter le principe de dégrader le moins possible ou pas de tout l'image radiographique.
Le procédé de Cryptage d'un repère symétrique placé selon les coordonnées x,y et aussi petit que possible sous le format JPG est réalisable ; il présente l'avantage d'être d'emblée permanent et présente l'inconvénient de dégrader une petite partie de l'image qui n'est plus utilement lisible.
Le procédé de Watermarking Localisé (« LATERALITY WATERMARKING ») dans l'image selon les coordonnées x,y présente l'avantage de ne pratiquement pas dégrader l'image, de pouvoir être affiché sur l'image à la demande ou retiré de celle-ci pour bénéficier de la totalité de la surface d'examen de l'image : en effet, le nombre et la profondeur des pixels sont choisis de façon à ne pas altérer l'image.
Le procédé de Marquage Périmétrique Localisé consiste à ajouter un petit nombre de colonnes et rangées de pixels en périphérie de l'image radiographique et à utiliser un endroit de cette zone périphérique pour localiser les coordonnées x,y du marqueur ; ce procédé présente l'avantage de n'apporter aucune dégradation de l'image radiographique.
Le procédé de Calque consiste à ajouter à l'image native issue des « data image » une image virtuelle contenant un repère symétrique quelconque placé selon les coordonnées x,y ; ce procédé présente l'avantage de n'apporter aucune dégradation de l'image radiographique ; il a notre préférence en raison de sa souplesse d'utilisation et l'absence d'altération de l'image.

Le marqueur numérique de latéralité ainsi décrit présente donc l'avantage d'être totalement indépendant des facteurs tels que la densité tissulaire locale du patient sur laquelle est placé ce marqueur, du degré de collimation verticale ou latérale du système du faisceau des rayons X produisant l'image, de la dose de rayons X utilisée pour l'examen concerné, du recadrage à posteriori de l'image originale, contrairement au marqueur physique externe plombé par exemple utilisé dans la pratique habituelle en radiologie.

### Quel affichage utiliser sur l'image radiographique ?

Le marqueur symétrique de latéralité utilisé pour la démonstration peut servir uniquement à identifier de façon permanente et indélébile la latéralité de l'image numérique, ensuite lorsque la valeur est stockée sous format DICOM, Fig. 3, 144, ce champ DICOM est utilisé pour générer l'affichage sous forme de n'importe quel graphisme, dans n'importe quelle langue, dans n'importe quel endroit à convenir dans l'image ; cet affichage de latéralité pouvant en outre être présent ou absent selon la zone d'intérêt examinée et/ou selon le choix de l'examinateur.

Le marqueur numérique ainsi décrit est appliqué sur l'image brute soit dans la phase de processus de lecture des « data image » par le système dédicacé, soit dans une phase ultérieure quelconque puisque les algorithmes DICOM accompagnent l'image numérique: il est donc également possible de reprendre ladite image brute si elle est stockée et disponible dans la « data base image » et de lui appliquer en phase de post-processing le marquage numérique de latéralité selon la description présentée par mon invention; bien qu'utilisé de façon différée, le marquage décrit dans mon invention présente l'avantage de pouvoir contrôler non seulement les manipulations subies par l'image originale telle qu'elle est issue du système dédicacé de lecture des « data image », mais peut également vérifier la conformité de l'image originale elle-même par rapport aux conditions réelles de réalisation de l'examen radiographique constitutif de l'image originale.
Cette conformité de l'image originale sera validée dans tous les cas où l'acquisition a été réalisée dans les conditions décrites comme normales en ce qui concerne la position des cassettes et du patient en conformité avec les algorithmes requis par l'examen sélectionné Fig. 3, 137 et 138, mais en cas d'erreur soit de position de la cassette 132 et/ou de l'orientation du patient 133, nous faisons appel à un procédé original de détection 139 et correction automatique 143 des erreurs.

### Détection et correction automatique des erreurs.

Afin de détecter et corriger automatiquement les erreurs d'orientation du patient et/ou les erreurs de position des cassettes et/ou surfaces radio-sensibles, je propose un système de détection automatique de l'orientation du patient (DOP ) Fig. 3, 141 et un système de détection automatique de la position de la cassette et/ou de la surface radio-sensible ( DPC ) 140, lesquels peuvent être utilisés selon l'organigramme de la Fig. 3.

Un système de détection automatique de l'orientation du patient peut être basé soit sur la détection biométrique de la position du coeur du patient, soit sur un système de reconnaissance numérique d'image, soit par la combinaison des deux.

Description d'un système de détection biométrique de la position du coeur du patient. Plusieurs systèmes sont aptes à détecter à distance la position du coeur et donc l'orientation « Ap » Fig. 2 121 ou « Pa » 122 du patient, avec pour exception l'existence éventuelle d'une malformation cardiaque , entre autres, la dextrocardie : dans ce cas, il y a discordance entre la détection automatique et les valeurs des algorithmes DICOM correctement sélectionnés. Néanmoins, cette discordance pourrait également être utilisée en qualité de détection numérique automatique d'une malformation cardiaque éventuelle.
L'utilisation d'un système à émetteur IR avec son récepteur d'ondes réfléchies placé sur le support du tube radiogène et donc face au patient tel que décrit par Berenz, EP1167127 permet la détection de présence humaine et l'identification de la face de la personne : ce système est apte à réaliser la détection de l'orientation du patient. D'autres systèmes connus sont décrits par Breed US5653462 qui utilise à la fois des ultrasons, des micro-ondes et IR, par Comaniciu US2002064314 qui utilise un procédé optique et biométrique de reconnaissance humaine.

L'utilisation de au moins deux systèmes de détection et localisation cardiaque par ondes radar permet grâce à la différence d'amplitude des signaux reçus par chacun des au moins deux systèmes, de localiser le coeur et donc l'orientation du patient normal, sauf exception de malformation citée ci-dessus. Ikramov RU2159942 utilise un système de localisation par radio-fréquence pour identifier les signes biométriques tels que les pulsations cardiaques. Guttman WO00/04824 décrit un procédé de détection de l'onde R de l'électrocardiogramme au moyen d'un détecteur de l'amplitude de l'activité électrique du coeur grâce à un système d'antenne de proximité mais sans électrode fixée au patient ; nous utilisons le principe de Guttman dans la description Fig. 13 où 311 , 312, 313 représentent trois antennes de proximité placées dans le statif à gauche du patient vu ici depuis l'arrière du statif 104, le patient étant placé le dos contre le statif 116; trois antennes sont placées de façon symétrique sur le côté droit du patient.
Afin de garantir la simultanéité de l'incidence radiographique réalisée et le recueil des informations par les antennes, l'acquisition du signal par les antennes est réalisée dans le temps le plus proche possible de celui de l'émission des rayons X ; les signaux des différentes antennes sont reçus par l'analyser 310 qui transmet le résultat au computer 212 dont le programme calcule l'intensité et l'amplitude comparatives des signaux droits et gauches permettent d'identifier la position « Ap » 121 ou « Pa » 122 du patient ; ce résultat est acheminé par le système RIS depuis le statif radiographique vers le système dédicacé de traitement de l'image numérique qui stockera l'information DOT, Détection de l'Orientation du Patient 141.

### Description d'un système de détection optique de l'orientation du patient.

Je propose un système de photographique numérique en lumière blanche ou IR , avec archivage de l'image numérique et avec traitement automatique de l'image par un programme de reconnaissance des images pouvant être utilisé pour détecter et/ou valider la conformité de l'orientation « Ap » ou « Pa » du patient.
Description et fonctionnement : Fig. 14, 220 une caméra numérique est positionnée sur le système de collimation du tube radiogène 103, centrée perpendiculairement sur la surface radio-sensible et donc au sujet positionné entre le tube radiogène et la surface radio-sensible 101. La focale de l'optique est calculée pour couvrir la zone d'intérêt 221,222.
Une ou plusieurs photos sont prises automatiquement lors de chaque radiographie 225, selon les prescriptions requises par le système de reconnaissance d'image utilisé;
la photographie numérique ou la première photographie de la séquence numérique est transmise et/ou référencée dans le champ DICOM dédicacé à cet effet, la modalité (statif radiographique) étant reliée au logiciel de traitement d'image numérique par RIS (Radiological Integrated System) 213 .
Utilisation directe de l'image photographique : la photographie archivée 142 peut être éventuellement visualisée (OPI = Orientation Patient Image), par exemple sous format compressé et réduit (« thumb ») superposé à l'image radiographique correspondante, comme cela est généralement appliqué en tomodensitométrie ou IRM afin d'indiquer le plan de référence d'une reconstruction par rapport à une image choisie pour référence : 226 soit automatiquement pour toutes les images radiographiques, soit à la demande au cours du post-processing sur tout écran de visualisation et/ou sur le film radiographique dans le but de vérification de latéralité du patient ou dans le but de traçabilité des manipulations de l'image radiographique numérique ( dans le respect des règles de confidentialité de l'accès au dossier médical numérisé), soit en cas d'erreur de la reconnaissance numérique d'image (voir ci-dessous).
Utilisation de la reconnaissance numérique d'image 227: la photographie est en outre traitée par un logiciel de reconnaissance d'image pour identifier la position antéro-postérieure « Ap » 121 ou postéro-antérieure « Pa » 122 du patient ; cette valeur est également archivée dans un champ DICOM dédicacé à cet effet 141 DOP ( Détection de l'orientation du Patient).
Les systèmes proposés par Comaniciu US2002064314, Imagawa US 2002051578, Nagai US2001019620 sont utilisables la plupart du temps pour identifier l'orientation du patient ; toutefois les limites d'identification peuvent intervenir si le patient est soit recouvert de pansements, soit équipé de matériel externe de diagnostic ou de traitement : dans ces cas une amélioration de l'identification de l'orientation peut être obtenue par la combinaison de procédés biométriques et optiques de détection ; en cas de défaillance du système de reconnaissance d'image, la visualisation de l'image de l'orientation du patient (OPI) Fig. 14, 142, 226 peut être appliquée automatiquement.

Description d'un système automatique de Détection de Position de la Cassette : (DPC) 140. Deux cas sont envisagés : soit la cassette est utilisée sans statif, soit la cassette est utilisée dans un statif.

Dans le premier cas, lors de l'utilisation de la cassette sans statif, la situation est particulièrement difficile à surmonter parce qu'il n'y a aucune liaison mécanique entre ladite cassette et la modalité radiographique : je propose un dispositif original qui apporte une solution de Détection de la Position de la Cassette 140 (DPC) qui jusqu'à ce jour n'a fait l'objet d'aucune proposition connue ; ce dispositif Fig. 16 consiste à placer sur un angle du système de collimation du tube radiogène 103 un «Lecteur de proximité Emetteur-Récepteur RFID » 240 focalisé sur le secteur (a,b,c,) 242 , par exemple supérieur droit du patient et de la cassette placée située sous lui, de façon à situer un Tag passif 243 dans l'aire de réception de l'onde RF, attendu que la focalisation est telle que les trois autres angles et Tags 244, 245 et 246 de la cassette soient situés en dehors de la zone de focalisation de l'antenne RFID-Réception du lecteur de proximité 240; l'émetteur RFID envoie une onde RF captée par le transpondeur 243 ; le signal codé réémis par 243 est reçu par l'antenne réceptrice RFID 240 et transmis à l'analyseur RFID- Réception 249 qui identifie 243 ; cette information est transmise par l'interface 248 au computer 212 dont le programme procède à la détection automatiquement le position de la cassette 123 à 126 par suite des codes 243 à 246 contenus dans l'identité des Tags ; cette position est transmise par RIS 213 au système d'archivage de la Détection de la Position de Cassette (DPC) 140.
Une variante de ce dispositif consiste à placer un lecteur de proximité RFID à chacun des quatre angles du système de collimation du tube et à placer un seul Tag 243 sur la cassette, de façon à ce que seul le récepteur RFID dont le secteur est occupé par 243 reçoive le signal du code unique ; la représentation de la Fig. 16 montre également que le Tag 243 unique peut occuper successivement les secteurs occupés par 244, 245, 246, selon chacune des positions possibles pour la cassette ; dans cette version, c'est l'identification du lecteur de proximité qui constitue la référence de positionnement de la cassette ; cette solution présente l'avantage de réduire le risque d'interférences pouvant survenir lorsque plusieurs Tags se trouvent dans une relative proximité.
Ce système original de détection de la cassette peut en outre utilement être employé pour relier les informations relatives à l'identité du patient au système de traitement de l'image numérique dans les cas où en particulier l'examen radiographique est réalisé à distance du service d'imagerie médicale, comme par exemple les services d'urgences ou les soins intensifs puisque les lecteurs de proximités peuvent éventuellement stocker un grand nombre d'informations : cette utilisation nouvelle permettrait de réduire les risques d'erreurs d'identification du patient.
L'utilisations des ondes RF est bien connue en imagerie radiographique numérique puisque certains constructeurs utilisent dans le service d'imagerie médicale un procédé RF pour transmettre l'identité du patient vers la cassette contenant l'IP afin de joindre ces informations dès la lecture des «data image » par le système dédicacé.

Dans le second cas, lors du cas d'utilisation d'un statif aussi appelé modalité radiographique, les procédés de détection de format et de position soit verticale, soit transversale d'une cassette sont multiples et bien connus de la technique ; toutefois il faut en outre obtenir l'information permettant d'identifier la position du côté « AB » de ladite cassette dans chacune des positions verticales et horizontales ; pour y parvenir on peut utiliser de nombreux systèmes connus: mécaniques, lecteurs magnétiques, lecteurs magnéto-optiques, IR, codes barres, etc....

Pour la clarté de la démonstration de mon invention, j'ai choisi d'illustrer par un exemple simple d'identification des positions P1, P4, P1-90° et P4-90° de la cassette dans un statifpar l'utilisation d'un dispositif équipé de capteurs magnétiques Fig. 15.
Description et fonctionnement : soit 123 à 126 représentant la cassette vue par la face arrière, dans les différentes positions, respectivement de « P1 » 123 à « P4 » 126 et comportant 230 un élément magnétique fixe placé par exemple sur la face arrière de ladite cassette;
Une série de 4 détecteurs magnétiques est disposée verticalement par exemple à l'entrée du statif 104, soit 213, 232, 233 et 234.
L'élément magnétique placé en 230, sur la face arrière de la cassette, est positionné de façon à passer devant le détecteur correspondant lors de chacune des positions P1, P4, P1-90°, P4-90° : en position « P1 » 123, l'élément magnétique sera détecté par le détecteur 231 ; en position « P4 » 124, l'élément magnétique sera détecté par le détecteur 231 ; en position « P1-90° » 125, l'élément magnétique sera détecté par le détecteur 233 ; en position « P4-90° » 126, l'élément magnétique sera détecté par le détecteur 234.
La détection de position de cassette peut se faire au moment de l'entrée de la cassette dans le statif ou à sa sortie, l'axe de la cassette 236 coïncide dans chaque position de la cassette avec l'axe du statif radiographique ; la valeur 231 ou 232 ou 233 ou 234 est transmise par l'analyser 235 dans le champ DICOM dédicacé à cet effet 140 (DPC) Détection de la Position de Cassette, la modalité radiographique étant reliée au logiciel de traitement d'image numérique par RIS (Radiological Integrated System)213.
Un autre procédé technique original permet d'obtenir le même résultat au moyen d'un système d'identification à distance par radiofréquence (« RFID ») : en remplaçant les détecteurs magnétiques de la Fig 15 par des « Lecteurs de proximité- RFID » en 231, 232, 233, 234 et en remplaçant sur la cassette l'élément magnétique 230 par un « Transpondeur passif » ; cette technique de lecteurs de proximité avec Tag passif ou actif est utilisée couramment dans différents secteurs : à titre d'exemple, les « Tags disques PC » à 125kHz de la marque STID présentent des caractéristiques compatibles avec l'utilisation qui décrite dans mon invention ; la position des lecteurs de proximité 231 à 234 et du Tag 230 en arrière de la cassette se justifie parce que les ondes RF ne passent pas la grille anti-diffusante habituellement utilisée dans les statif de radiographie.

Nous disposons à présent de tous les dispositifs du système automatique de détection et correction de latéralité de l'image radiographique numérique : nous retournons à l'algorithme général du système, Fig. 3, nous permettant d'appliquer toutes les méthodes décrites pour corriger 143 les erreurs détectées lors de l'analyse 137 concernant la position de la cassette 132 et/ou l'orientation du patient 133, par rapport aux algorithmes contenus dans l'examen sélectionné 131, de façon à valider les phases du pré-processing aboutissant à la construction l'image originale et en outre de détecter toute manipulation de l'image dans le post-processing pouvant aboutir à une erreur d'identification de latéralité. La méthode générale et les dispositifs décrits sont originaux et apportent une solution innovante dans le domaine de l'imagerie médicale permettant de renforcer la qualité des soins et la sécurité du patient à travers toutes les étapes de l'image radiographique numérique.

### Terminology

| Ref number | Designation |
|---|---|
| 101 | Support radio-sensible |
| 102 | Patient |
| 103 | Tube radiogène |
| 104 | Statif radiographique |
| 105 | Limite du faisceau RX |
| 106 | Limite du faisceau Rx |
| 111 | Côté droit du patient |
| 112 | Côté gauche du patient |
| 113 | Projection de la silhouette cardiaque |
| 116 | Vue postérieure du patient en orientation Antéro -Postérieure |
| 117 | Face antérieure du statif |
| 121 | Position Antéro-Postérieure du patient devant la source radiogène |
| 122 | Position Postéro-Antérieure du patient devant la source radiogène |
| 123 | Support cassette dont le côte départ est situé en haut du statif |
| 124 | Support cassette dont le côte départ est situé en bas du statif |
| 125 | Support cassette dont le côte départ est situé vers la droite du statif |
| 126 | Support cassette dont le côte départ est situé vers la gauche du statif |
| 127 | Elément radio-sensible (IP= Image Plate) dirigé vers le haut du statif |
| 128 | Elément radio-sensible (IP= Image Plate) dirigé vers le bas du statif |
| 131 | Examen sélection |
| 132 | Position cassette, côté « AB » correspond au début des Data Image |
| 133 | Orientation Patient (Pat or) |
| 134 | X-Ray |
| 135 | Select DICOM Algorithm |
| 136 | Reading Data Image + Laterality Marking |
| 137 | Analysis |
| 138 | Concordance DICOM |
| 139 | Read Dicom Position Cassette (DPC) + Dicom Orientation Patient (DOP) |
| 140 | Dicom Position Cassette System ( DPC ) |
| 141 | Dicom Orientation Patient System ( DOP ) |
| 142 | Storage Orientation Patient Image ( OPI ) |
| 143 | Automatic Correction DPC + DOP |
| 144 | Laterality Dicom Storage |
| 145 | Discordance DICOM |
| 146 | No validity of Laterality : Alarm |
| 150 | Marqueur numérique symétrique positionné à l'angle supérieur gauche du support de l'image numérique |
| 151 | Système de localisation du marqueur numérique |
| 152 | Position supérieure gauche du marqueur par rapport à l'image théorique |
| 153 | Position supérieure droite du marqueur par rapport à l'image théorique |
| 154 | Position inférieure gauche du marqueur par rapport à l'image théorique |
| 155 | Position inférieure droite du marqueur par rapport à l'image théorique |
| 156 | P1 = Localisation du marqueur en cas d'orientation normale du support vers le haut |
| 157 | P2 = Position IMPOSSIBLE du marqueur par rapport au support |
| 158 | P3 = Position IMPOSSIBLE du marqueur par rapport au support |
| 159 | P4 = Localisation du marqueur en cas d'orientation erronée du support vers le bas |
| 161 | Localisation Up-R du marqueur sur l'image radiographique finale |
| 162 | Localisation Up-L du marqueur sur l'image radiographique finale |
| 163 | Localisation Down-L du marqueur sur l'image radiographique finale |
| 164 | Localisation Down-R du marqueur sur l'image radiographique finale |
| 165 | Localisation Down-R du marqueur sur l'image radiographique finale |
| 166 | Localisation Down-L du marqueur sur l'image radiographique finale |
| 167 | Localisation Up-L du marqueur sur l'image radiographique finale |
| 168 | Localisation Up-R du marqueur sur l'image radiographique finale |
| 171 | S1 =situation clinique : Cassette P1 + Patient Ap (NORMAL) |
| 172 | S2 =situation clinique: Cassette P1 + Patient Pa (NORMAL) |
| 173 | S3 =situation clinique: Cassette P4 + Patient Ap (ERREUR) |
| 174 | S4 =situation clinique: Cassette P4 + Patient Pa (ERREUR) |
| 175 | S5 =situation clinique: Cassette P1- 90° + Patient Ap (NORMAL) |
| 176 | 56 =situation clinique: Cassette P1- 90° + Patient Pa (ERREUR) |
| 177 | 57 =situation clinique: Cassette P4- 90°+ Patient Ap (ERREUR) |
| 178 | S8 =situation clinique: Cassette P4- 90° + Patient Pa (NORMAL) |
| 181 | Patient Ap + Cassette en rotation horaire 0° |
| 182 | Patient Ap + Cassette en rotation horaire 90° |
| 183 | Patient Ap + Cassette en rotation horaire 180° |
| 184 | Patient Ap + Cassette en rotation horaire 270° |
| 185 | Patient Pa + Cassette en rotation horaire 0° |
| 186 | Patient Pa + Cassette en rotation horaire 90° |
| 187 | Patient Pa + Cassette en rotation horaire 180° |
| 188 | Patient Pa + Cassette en rotation horaire 270° |
| 191 | PACS |
| 192 | Printing ( Filming ) |
| 201 | Lecture de l'image radiographique et de latéralité à partir de la position du marqueur sur l'image radiographique finale |
| 202 | Lecture de l'image radiographique et de latéralité à partir de l'orientation du patient et la position de l'image radiographique finale |
| 203 | Synthèse de lecture de l'image radiographique et de latéralité à partir de la position du marqueur sur l'image radiographique finale associée à l'orientation du patient |
| 212 | Computer avec programme de traitement des données biométriques pour évaluation de l'orientation du patient |
| 213 | Liaison informatique entre les systèmes radiographiques dédicacés et l'informatique du réseau d'imagerie numérique |
| 220 | Camera numérique fixée sur l'ensemble radiogène face au patient |
| 221 | Limites du champ optique |
| 222 | Limites du champ optique |
| 223 | Champ optique sélectionné |
| 225 | Système programmé d'acquisition des images de l'orientation du patient |
| 226 | Checking : contôle visuel systématique ou optionnel de l'orientation |
| 227 | Optical Recognition : système de reconnaissance humaine avec traitement des informations permettant d'identifier automatiquement l'orientation du patient |
| 230 | Elément magnétique |
| 231 | Détecteur électro-magnétique de la position P1 de la cassette |
| 232 | Détecteur électro-magnétique de la position P4de la cassette |
| 233 | Détecteur électro-magnétique de la position P1 - 90°de la cassette |
| 234 | Détecteur électro-magnétique de la position P4 - 90° de la cassette |
| 235 | Analyser |
| 236 | Axe commun des cassettes et du statif |
| 240 | Lecteur de proximité Emetteur-Récepteur HF |
| 241 | Limite de la zone de focalisation |
| 242 | Secteur (a, b , c) de la zone de focalisation |
| 243 | Transpondeur : Tag passif positionné dans l'angle et identifiant P1 |
| 244 | Transpondeur : Tag passif positionné dans et identifiant P4 |
| 245 | Transpondeur : Tag passif positionné dans l'angle et identifiant P1 - 90° |
| 246 | Transpondeur : Tag passif positionné dans l'angle et identifiant P4 - 90° |
| 247 | RFID : Lecteur de proximité : Emission |
| 248 | Interface |
| 249 | RFID : Lecteur de proximité : Réception |
| 310 | Analyser biométrique |
| 311 | Antenne supérieure de réception, côté droit du statif en vue postérieure |
| 312 | Antenne moyenne de réception, côté droit du statif en vue postérieure |
| 313 | Antenne inférieure de réception, côté droit du statif en vue postérieure |

## Revendications

1. Méthode de détection et de correction d'erreurs de positionnement et d'identification de latéralité de l'image radiographique numérique, **caractérisée en ce que** la méthode comporte les étapes suivantes :
• la référence des algorithmes de l'examen radiographique contenus dans les champs DICOM (135) qui concernent l'orientation du patient (133),
• la référence des algorithmes de l'examen radiographique contenus dans les champs DICOM (135) qui concernent la position de la surface radio-sensible (132),
• la description et l'identification des positions normales de la surface radio-sensible et du patient dans les huit situations cliniques différentes rencontrées (171,178),
• la mise en place d'un marqueur numérique de latéralité (136,150) sur l'image originale selon un algorithme identifiant chacune des huit situations cliniques différentes (171,178),
• la détection automatique de l'orientation du patient (141),
• la détection automatique de la position de la cassette 140),
• l'analyse (137) de la concordance (138) entre le marquage de latéralité de l'image numérique et les algorithmes qui concernent l'orientation du patient et qui concernent la position de la cassette dans les cas de positionnement normal de ladite cassette,
• l'analyse de la détection de l'orientation du patient (141) et de la détection de la position de la cassette (140) en cas de discordance de latéralité (139) entre le marquage de l'image numérique et les algorithmes qui concernent la cassette et le patient survenant soit en cas de positionnement erroné de la cassette et/ou du patient, soit en cas de modification inadéquate des paramètres DICOM exécutée depuis la phase d'acquisition de l'image originale,
• la correction automatique (143) de la position de l'image radiographique numérique et de l'identification de latéralité en cas de détection d'erreur (139),
• l'archivage de l'identification de latéralité (144) de l'image radiographique numérique originale.

2. Méthode de détection et de correction d'erreurs de positionnement et d'identification de latéralité de l'image radiographique numérique selon la revendication 1, **caractérisée en ce qu'**elle peut être appliquée à toute image radiographique numérique lors de la phase de lecture initiale (136) des « data image » par le système dédicacé ou appliquée dans la phase de post-processing par un logiciel disposant des « data image » et des algorithmes DICOM (135) de l'examen réalisé (131).

3. Méthode de détection et de correction d'erreurs de positionnement et d'identification de latéralité de l'image radiographique numérique selon la revendication 1, **caractérisée en ce que** la vérification de la validité (137) de l'image originale est réalisable dans tous les cas de positionnement normal de la cassette (138) même si on ne dispose pas (145,203) des systèmes automatiques de détection de l'orientation du patient et détection de la position de la cassette.

4. Méthode de détection et de correction d'erreurs de positionnement et d'identification de latéralité de l'image radiographique numérique selon les revendications 1 à 3, **caractérisée en ce que** le marqueur numérique décrit est permanent.

5. Méthode de détection et de correction d'erreurs de positionnement et d'identification de latéralité de l'image radiographique numérique selon les revendications 1 à 3, **caractérisée en ce que** le marqueur numérique décrit est de forme symétrique.

6. Méthode de détection et de correction d'erreurs de positionnement et d'identification de latéralité de l'image radiographique numérique selon les revendications 1 à 3, **caractérisée en ce que** le marqueur numérique décrit peut être remplacé par n'importe quel graphisme, n'importe quel langage et situé à n'importe quel endroit de l'image finale sur laquelle il peut être affiché ou retiré.

7. Dispositif de détection de l'orientation du patient selon les revendications 1 et 2, **caractérisé en ce que** l'utilisation de systèmes biométriques de détection du coeur (310) par ondes radar et/ou des systèmes de détection optique (220) avec logiciel de reconnaissance humaine (227) permettent de détecter l'orientation du patient (141).

8. Dispositif de détection de l'orientation du patient selon la revendication 7, **caractérisée en ce que** la photographie en lumière blanche ou IR du patient peut être utilisée (142) pour vérification (226) de l'orientation du patient en accompagnant éventuellement l'image radiographique numérique sur le film et/ou sur l'écran.

9. Dispositif de détection de la position de la cassette selon les revendications 1 et 2, **caractérisée en ce que** l'utilisation d'un système de lecteur de proximité par ondes RFID (240) permet d'identifier la position exacte de la cassette, même éventuellement en cas d'utilisation de la cassette sans statif radiographique (243,246).

10. Dispositif de détection de la position de la cassette selon la revendication 9, **caractérisée en ce que** le système de lecteur de proximité par ondes RFID (240) permet en outre d'identifier éventuellement simultanément les coordonnées du patient.
